# EUROPÄISCHE PATENTSCHRIFT

(11) **EP 0 759 530 B1**
(45) Veröffentlichungstag und Bekanntmachung des Hinweises auf die Patenterteilung: **05.03.2003**
(21) Anmeldenummer: 96108555.2
(22) Anmeldetag: 29.05.1996
(51) Int. Cl.: F25D 23/06, F25D 29/00, A47B 96/00

(54) **Metallisches Blechteil, Gehäusedecke und Gerätedeckel**
Metallic sheet part, housing ceiling and apparatus cover
Elément de plaque métallique, plafond de caisson et couvercle d'appareil

(30) Priorität: 17.08.1995 DE 29513209 U
(43) Veröffentlichungstag der Anmeldung: 26.02.1997
(73) Patentinhaber: AEG Hausgeräte GmbH, 90429 Nürnberg (DE)
(72) Erfinder: Stassfurth, Hans-Jürgen, Dipl-Ing., 34253 Lohfelden (DE)

(56) Entgegenhaltungen:
- DE-A- 1 451 125
- FR-A- 2 284 095
- FR-A- 2 533 305

## Beschreibung

Die Erfindung bezieht sich auf ein Hausgerät, insbesondere auf ein Kühl- oder Gefriergerät.

In den Gerätedeckel eines Kühl- oder Gefriergeräts werden üblicherweise die Elektronik zur Einstellung des Geräts und die Anzeige- und Bedienelemente integriert. Der Gerätedeckel besteht üblicherweise aus einem Kunststoffspritzteil, welches von Zierleisten umgeben ist und auf der Vorderseite einen, metallischen Blechstreifen aufgeklebt hat, der als metallischer Gegenpol für die Türdichtung des Gerätes dient.

Das Verkleben der metallischen Leiste mit dem aus Kunststoff bestehenden Gerätedeckel ist vergleichsweise aufwendig und kompliziert. Außerdem besteht bei einem Kunststoffspritzteil ein Problem bezüglich der Türlagerbefestigung, welche eine starke mechanische Belastung für die Ecke des Kunststoffspritzteiles darstellt.

Der Erfindung liegt daher die Aufgabe zugrunde, diesen Aufwand zu verringern.

Diese Aufgabe wird erfindungsgemäß dadurch gelöst, daß eine Aufnahme vorgesehen ist, welche als metallisches Blechteil ausgebildet ist, wobei an der Aufnahme eine Sichtblende mit Bedien- und Anzeigeelementen angekoppelt ist und Befestigungsmittel vorgesehen sind, mittels derer eine Schaumsperre und mindestens eine Verstärkungsecke für die Befestigung eines Türlagers angekoppelt sind.

Auf diese Weise ist das metallische Blechteil Bestandteil des Gerätedeckels und bietet direkt einen metallischen Gegenpol für die Türdichtung an. Außerdem kann die am Vorderteil des Gerätedeckels erforderliche Türlagerbefestigung aufgenommen werden.

Wenn das metallische Blechteil weitergehend dahin ausgestaltet ist, daß ein Fach zur Aufnahme zumindest eines Teils der das Hausgerät einstellenden Elektronik vorgesehen ist, stellt das metallische Blechteil einen erheblichen Teil des Gerätedeckels dar, was sich bezüglich der mechanischen Steifigkeit von Front/Deckelpartie des Geräts positiv auswirkt.

Eine besonders vorteilhaft Weiterbildung der Erfindung sieht es vor, daß dem Fach ein Wärmeleitblech zugeordnet ist, welches Wärme in das Fach einführt. Auf diese Weise wird es sicher vermieden, daß im Fach und an der dort angeordneten Elektronik Flüssigkeit kondensiert. Dies ist umso bedeutsamer, weil der Bereich um das Fach eine dünnere thermische Isolierung aufweist als der übliche Bereich, so daß zwangsläufig ein vergleichsweise großer Kältefluß zum Fach und zu der dort angeordneten Elektronik vorherrscht. Das Problem des Betauens der Elektronik wird auf diese Weise betriebssicher und einfach gelöst.

Vorzugsweise umfaßt das Hausgerät weiterhin eine Gehäusedecke, die mit dem metallischen Blechteil verbunden, insbesondere zusammengesteckt, ist.

Auf diese Weise wird der Gerätedeckel, der sonst ein Kunststoffteil als Gehäusedecke umfaßt aus dem metallischen Blechteil und der Gehäusedecke gebildet. Die sich daraus ergebenen Vorteile sind vorstehend bereits diskutiert worden.

Es ist zweckmäßig, wenn die Gehäusedecke mindestens einen Kabelkanal und ein Fach zur Aufnahme zumindest eines Teils der das Hausgerät einstellenden Elektronik aufweist. Auf diese Weise kann die Elektronik in das Fach der Gehäusedecke eingesetzt werden, was auf Grund der Beschaffenheit der Gehäusedecke aus Künststoff vergleichsweise einfacher zu realisieren ist als bei einem metallischen Blechteil.

Bezüglich des bereits vorstehend diskutierten Betäuungsproblems ist es vorteilhaft, wenn dem Fach ein Wärmeleitblech zuordnungsbar ist, welches Wärme in das Fach einführt.

Ausführungsbeispiele der Erfindung werden anhand einer Zeichnung näher erläutert.

Dabei zeigen:

Ausführungsbeispiele der Erfindung werden anhand einer Zeichnung näher erläutert.

Dabei zeigen:
- **Fig. 1**: in perspektivischer Darstellung ein metallisches Blechteil; und
- **Fig. 2**: eine mit dem metallischen Blechteil gemäß Fig. 1 verbindbare Gehäusedecke; und
- **Fig. 3**: in Aufsicht das mit der Gehäusedecke gemäß Fig. 2 durch Zusammenstecken verbundene metallische Blechteil gemäß Fig. 1.

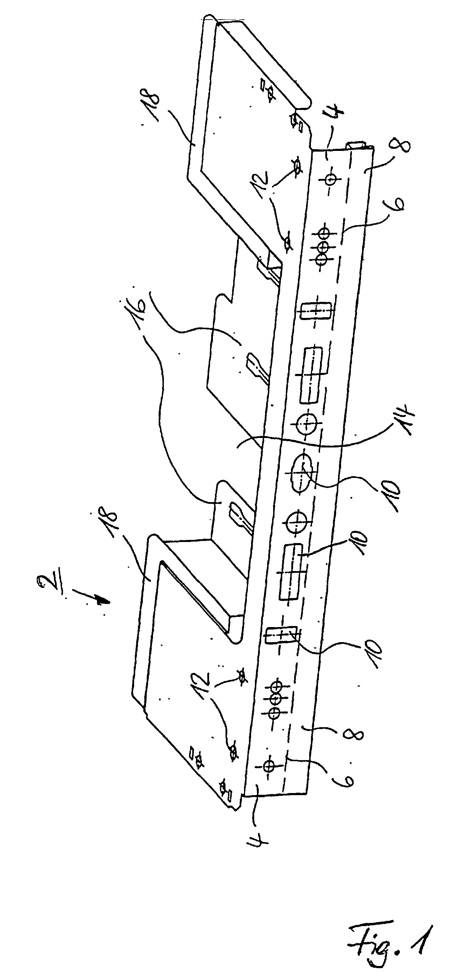

In den Fig. 1 bis 3 gleiche Teile haben gleiche Bezugszeichen.

Fig. 1 zeigt in perspektivischer Darstellung ein metallisches Blechteil 2, welches als Blendenaufnahme 4 für eine hier nicht weiter dargestellte Sichtblende mit Bedien- und Anzeigeelementen eines Gefriergeräts dient. Die Blendenaufnahme 4 dient zudem im unteren Teil 8, der durch eine gestrichelte Linie 6 abgetrennt ist, als Gegenpol für die Türdichtung der Tür des Gefriergeräts.

Der metallische Gegenpol für die Türdichtung wird daher nicht mittels einer aufgeklebten Metallschiene erzeugt, sondern ist zwangsläufig bereitgestellt, weil ein metallisches Blechteil 2 verwendet ist. Die Blendenaufnahme 4 weist zudem Durchbrüche 10 auf, die im fertigen Gerät von Bedien- und Anzeigeelementen durchragt werden. Die Sichtleiste wird üblicherweise auf die Blendenaufnahme 4 aufgeklebt und ist mit Symbolen und Zeichen bedruckt, die die Anzeige- und Bedienelemte erklären.

Das metallische Blechteil 2 weist zudem Bohrungen 12 auf, mittels derer je nach Anschlagseite der Tür mindestens eine Verstärkungsecke 38 für die Befestigung des Türlagers aufnehmbar ist.

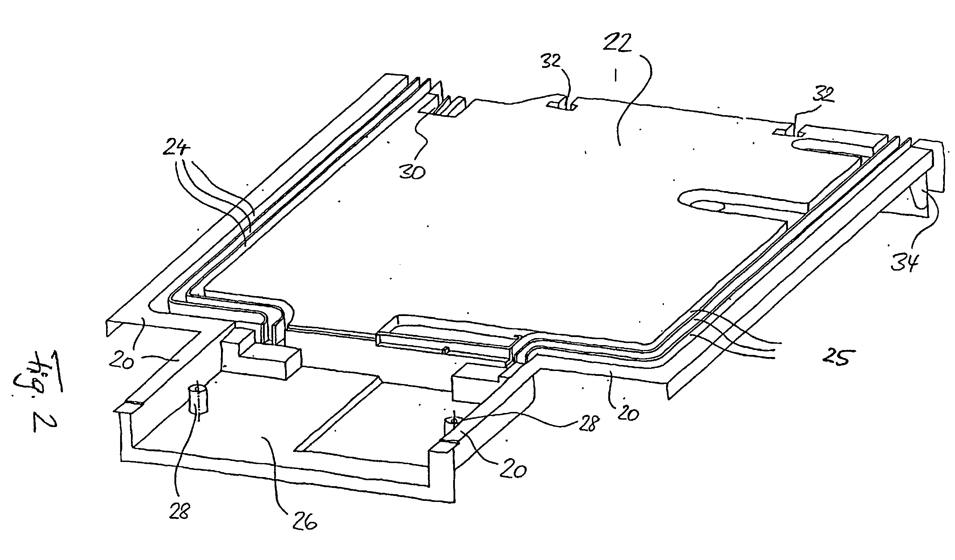

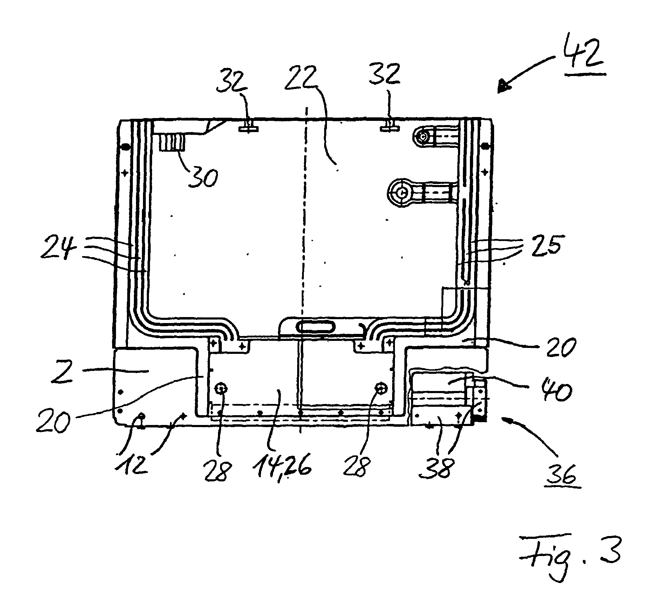

Das metallische Blechteil 2 weist weiter ein Fach 14 zur Aufnahme der das Gefriergerät einstellenden Elektronik auf. Diesem Fach 14 sind Wärmeleitbleche 16 zugeordnet, die diesem Fach 14 Wärme zuführen, wenn das metallische Blechteil 2 in den Gerätedeckel des Gefriergeräts integriert ist. Das metallische Blechteil 2 umfaßt außerdem einen Absatz 18, auf dem ein Gegenpol 20 einer Gehäusedecke 22 (vgl. Fig. 2) aufsitzt, wenn das metallische Blechteil 2 und die Gehäusedecke 22 zusammengeführt sind (vgl. Fig. 3).

Die Gehäusedecke 22 gemäß Fig. 2 ist im Ausführungsbeispiel ein Kunststoffspritzteil und umfaßt Kabelkanäle 24,25 zur Aufnahme von elektrischen Zuleitungen zu einem Elektronikfach 26. Hierbei ist der Kabelkanal 25 nur für die geräteinterne Verschaltung vorgesehen, wodurch die im Kabelkanal 24 führbaren netzseitigen Spannungszuführungen besonders betriebssicher von der geräteinternen Verschaltung getrennt angeordnet sind. Das Elektronikfach 26 weist Befestigungspunkte 28 für eine hier nicht weiter dargestellte Platinenaufnahme auf. Auf dieser Platinenaufnahme befinden sich Leiterplatinen mit den Bedien- und Anzeigeelementen des Gefriergeräts. Die Gehäusedecke 2 verfügt außerdem über eine Steckeraufnahme 30, eine Kabelaufwicklung 32 und eine Aufnahme 34 für die Rückwand des Gefriergeräts.

Beim Zusammenstecken des metallischen Blechteils 2 und der Gehäusedecke 22 wird das Elektronikfach 26 über den Wärmeleitblechen 16 befindlich in das Fach 14 eingeschoben.

Der Gegenpol 20 der Gehäusedecke 22 sitzt auf dem Absatz 18 des metallischen Blechteils 2 auf.

Fig. 3 zeigt in einer Aufsicht auf einem unvollendeten Gehäusedeckel 42 das metallische Blechteil 2 und die Gehäusedecke 22. Beide Teile sind durch einfaches Zusammenstecken miteinander verbunden. In der zeichnerischen Darstellung gemäß Fig. 3 ist eine untere rechte Ecke 36 teilweise aufgebrochen dargestellt, wodurch eine Verstärkungsecke 38 und eine Schaumsperre 40 sichtbar werden.

In der dargestellten Aufsicht sind die Wärmeleitbleche 16 nun nicht mehr sichtbar, weil diese unterhalb des Fachs 14,26 angeordnet sind. Diese Wärmeleitbleche sorgen für einen Wärmeeintrag in das Fach 14,26, so daß ein Betauen in diesem Fach 14,26 vermieden wird, obwohl ein vergleichsweise großer Kältefluß zu diesem Fach 14,26 auf Grund der weniger dick ausgeführten Wärmeisolierung herrscht. Die Wärmeisolierung ist hier in diesem Bereich um etwa die Dicke des Fachs 14,26 verringert.

## Patentansprüche

1. Hausgerät, insbesondere Kühl- oder Gefriergerät, mit einer als metallisches Blechteil ausgebildeten Aufnahme (4), an der eine Sichtblende mit Bedien- und Anzeigeelementen angekoppelt ist, wobei die Aufnahme Befestigungsmittel aufweist, mittels derer eine Schaumsperre (40) und mindestens eine Verstärkungsecke (38) für die Befestigung eines Türlagers angekoppelt ist.

2. Hausgerät nach Anspruch 1, **dadurch gekennzeichnet, daß** am metallischen Blechteil (2) ein Fach (14) zur Aufnahme mindestens eines Teils der das Hausgerät einstellenden Elektronik vorgesehen ist.

3. Hausgerät nach Anspruch 2, **dadurch gekennzeichnet, daß** dem Fach (14) ein Wärmeleitblech (16) zugeordnet ist, welches Wärme in das Fach (14) hinführt.

4. Hausgerät nach einem der Ansprüche 1 bis 2, **dadurch gekennzeichnet**, däß eine Gehäusedecke (22) umfaßt ist, die mit dem metallischen Blechteil (2) verbunden, vorzugsweise zusammengesteckt, ist.

5. Hausgerät nach Anspruch 4, **dadurch gekennzeichnet, daß** die Gehäusedecke (22) mindestens einen Kabelkanal (24), vorzugsweise zwei Kabelkanäle (24,25), und ein Fach (26) zur Aufnahme zu mindestens eines Teil der das Hausgerät einstellenden Elektronik und vorzugsweise eine Steckeraufnahme (30) vorgesehen sind.

## Claims

1. Domestic appliance, in particular refrigerator or freezer, having a receptacle (4) formed as a sheet-metal part, to which a screen is coupled with operating and display elements, the receptacle having fixing means with which a foam stopper (40) and at least one reinforcing corner (38) for fixing a door mount is coupled.

2. Domestic appliance according to claim 1, **characterised in that** on the sheet-metal part (2) a shelf (14) is provided for receiving at least one part of the electronic device for setting the appliance.

3. Domestic appliance according to claim 2, **characterised in that** a heat-conducting sheet (16) is allocated to the shelf (14) and conducts heat into the shelf (14).

4. Domestic appliance according to one of claims 1 or 2, **characterised in that** a housing cover (22) is comprised, which is connected, preferably mated together with the sheet-metal part (2).

5. Domestic appliance according to claim 4, **characterised in that** the housing cover (22) is provided with at least one cable channel (24), preferably two cable channels (24, 25), and a shelf (26) for receiving at least part of the electronics for setting the appliance, and preferably one plug seat (30).

## Revendications

1. Appareil ménager, notamment appareil de réfrigération ou de congélation, avec un logement (4) réalisé sous forme de partie métallique en tôle auquel est couplé un panneau visuel avec des éléments de commande et d'indication, où le logement présente des moyens de fixation au moyen desquels est accouplé un organe d'arrêt de mousse (40) et au moins un coin de renforcement (38) pour la fixation d'un palier de porte.

2. Appareil ménager selon la revendication 1, **caractérisé en ce qu'**il est prévu à la partie métallique en tôle (2) une case (14) pour la réception d'au moins une partie de l'électronique réglant l'appareil ménager.

3. Appareil ménager selon la revendication 2, **caractérisé en ce qu'**il est associée à la case (14) une tôle conductrice de chaleur (16) qui amène de la chaleur dans la case (14).

4. Appareil ménager selon l'une des revendications 1 à 2, **caractérisé en ce qu'**il comprend un couvercle de boîtier (22) qui est relié à la partie métallique en tôle (2), de préférence par emboîtement.

5. Appareil ménager selon la revendication 4, **caractérisé en ce que** le couvercle de boîtier (22) présente au moins un canal de câble (24), de préférence deux canaux de câble (24, 25) et une case (26) pour la réception d'au moins une partie de l'électronique réglant l'appareil ménager et de préférence un logement de fiche (30).
